Europäisches Patentamt

**European Patent Office**

Office européen des brevets

(19)

(11) Veröffentlichungsnummer : **0 080 184**
**B1**

(12) EUROPÄISCHE PATENTSCHRIFT

(45) Veröffentlichungstag der Patentschrift :
20.08.86

(51) Int. Cl.⁴ : **G 01 N 25/54**

(21) Anmeldenummer : **82110705.9**

(22) Anmeldetag : **19.11.82**

(54) **Gerät zur Kontrolle der potentiellen Gefährlichkeit eines aus Gas und/oder Dämpfen bestehenden gasförmigen Gemisches.**

(30) Priorität : 24.11.81 IT 2526281

(43) Veröffentlichungstag der Anmeldung :
01.06.83 Patentblatt 83/22

(45) Bekanntmachung des Hinweises auf die Patenterteilung : 20.08.86 Patentblatt 86/34

(84) Benannte Vertragsstaaten :
BE CH DE FR GB LI NL

(56) Entgegenhaltungen :
DE-B- 1 002 145
FR-A- 2 330 288
GB-A- 692 712
GB-A- 693 565
US-A- 1 977 481
US-A- 3 978 877
STAUB REINHALTUNG DER LUFT, Band 41, Nr. 5, Mai
1981, Seiten 184-189, Düsseldorf (DE)., G. NINDELT et
al., "Unterschungsergenisse zur Explosionsneigung
hybrider Gemische beim Elektroabscheiderbetrieb"

(73) Patentinhaber : STAZIONE SPERIMENTALE PER I
COMBUSTIBILI
Via Galileo Galilei, 1
I-20097 San Donato Milanese (IT)

(72) Erfinder : Fiumara, Annunziata
Via A. Bazzini, 16
I-20100 Milano (IT)

(74) Vertreter : Dr. Ing. A. Racheli & C.
Viale San Michele del Carso, 4
I-20144 Milano (IT)

## Beschreibung

Die vorliegende Erfindung betrifft ein Gerät zur Kontrolle der potentiellen Gefährlichkeit eines aus Gas und/oder Dämpfen bestehenden Gemisches.

Zur Kontrolle der Gefährlichkeit eines Brennstoffgemisches greift man gegenwärtig zur analytischen Bestimmung der entsprechenden Atmosphäre. Anhand der erhaltenen Zusammensetzung ist es erforderlich, in spezialisierten Laboratorien das zu prüfende Gemisch nachzuerzeugen, wobei von den einzelnen Bestandteilen ausgegangen wird. Selbstverständlich ist es in den meisten Fällen zum Herstellen eines Gemisches, besonders wenn sie komplizierter Zusammensetznung ist, erforderlich, zu wirksamen Vereinfachungen infolge der praktischen und analytischen Unmöglichkeit der genauen Herstellung der Zusammensetzung in allen Einzelheiten, zu greifen. Nach der Herstellung des Gemisches werden die Proben der Entzündbarkeit soweit als möglich durchgeführt, wobei die Temperatur- und Druckbedingungen des zu prüfenden Vorganges wiedergegeben werden.

Die Aufeinanderfolge der Vorgänge, von denen einige sehr kompliziert sind, verusacht einen erheblichen Zeitaufwand von spezialisiertem Personal, wodurch bedeutende Kosten entstehen und die erhaltenen Ergebnisse nicht immer die absolute Ungefährlichkeit des Gemisches gewährleisten, was natürlich zum Nachteil der Unternehmer und der entsprechenden Strukturen ist.

Einige Vorrichtungen zur Durchführung der Kontrolle von Gemischproben sind bekannt :

Der Artikel von Gerhard Nindelt et al in « Staub-Reinhaltung der Luft » Vol. 41 (1981) Nr. 5, Mai, S. 184-189, beschreibt eine Vorrichtung für Analysen in der das Explosionsgefäss, nachdem es mehrmals gefüllt und geleert wurde, ein letztes Mal gefüllt und dann das Gemisch mittels einer Glühkerze oder eines Hochspannungsfunkens, dessen Energie nicht angegeben ist, gezündet und der Explosionsvorgang auf einem Oszillographen mit Speicher beobachtet wird.

Die FR-A-2 330 288 betrifft die laufende Messung eines Gemisches von Brenngas und Luft in einem zu überwachenden Bereich. Dabei ist vorgesehen, das Gemisch in eine Kammer einzuführen, in der periodisch ein nicht näher bezeichneter Funke erzeugt wird, während der Zustand, in dem die Explosion erfolgt oder nicht, festgestellt und insbesondere der Druck gemessen wird.

Die GB-A-693 565 betrifft Schutzvorrichtungen für Industrieanlagen zur Gasreinigung, wobei insbesondere die Explosionskammer mit einem Sicherheitsventil versehen ist. Die Zündung des Gemisches wird von einer Zündkerze oder von einem Heizelement verwirklicht.

Die GB-A-692 712 beschreibt ein Verfahren und eine Vorrichtung für die Analyse von Brenngas. Eine Gasprobe wird über ein Rohr und ein Rückschlagventil mittels einer Pumpe der Hauptleitung entnommen. Die Luft wird ebenfalls mittels einer Pumpe entnommen und dem Gas zugefügt ; zusammen durchlaufen Luft und Gas eine Flammensperrvorrichtung und dann wird das Gemisch in die Explosionskammer eingeführt. Die Zündung erfolgt durch einen zwischen zwei Elektroden zündenden Funken.

Die DE-B-1 002 145 behandelt ein Verfahren zur kontinuierlichen Bestimmung der Explosionsgrenzen von Gasgemischen. Das Gemisch gelangt zu einem Zündkopf und einem Gummiballon, wobei im Zündkopf eine Glühspirale und eine Elektronengruppe enthalten sind. Die Explosion wird an einem Druckimpulsanzeiger abgelesen.

Keine der vorstehend beschriebenen Systeme trägt der Tatsache Rechnung, dass es erforderlich ist, in dem Gemisch eine schnelle Erwärmung zu erzeugen, die die Eingenschaften des zu prüfenden Gemisches nicht wesentlich ändert und gleichzeitig die für die Zündung erforderliche Energie liefert. Eine Erwärmung bei konstantem Strom würde dagegen eine örtliche Erwärmung des während eines beachtlichen Zeitraums zu prüfenden Gemisches erzeugen und dadurch eine Veränderung des Gemisches hervorrufen.

Die Vorliegende Erfindung hat sich zur Aufgabe gemacht ein Gerät zu verwirklichen, mit dem es möglich ist, die Flammbarkeit (Explosionsfähigkeit) oder die Nichtentzündbarkeit des Gemisches zu prüfen, ohne eine Nacherzeugung im Laboratorium mit den entsprechenden analytischen Bestimmungen sowohl für ein aus einem Brennstoff bestehendes Gemisch als auch aus Brennstoffgemischen und Brennstoff-Verbrennungsmittelgemischen durchführen zu müssen und zwar so, dass das Gemisch während der Prüfung keine Veränderung erleidet.

Die Aufgabe wurde durch die in Patentspruch 1 beschriebene Vorrichtung gelöst.

Weitere vorteilhafte Verwirklichungen sind in den nachfolgenden Ansprüche 2 bis 7 beschrieben.

Nachstehend wird eine bevorzugte Verwirklichung der Erfindung anhand der beigefügten Zeichnung beschrieben : Es zeigen :

Fig. 1 ein Schema der Bestandteile der Einrichtung ;

Fig. 2 eine Verwirklichung des Zündkreises.

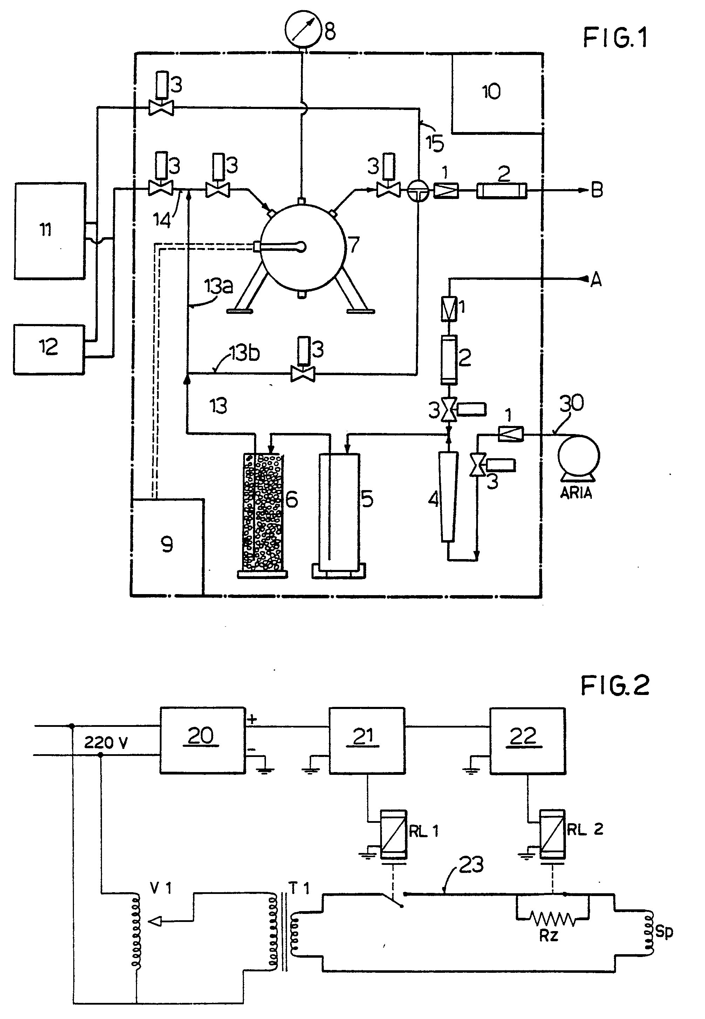

Wie aus Figur 1 ersichtlich, wird das potentiell explodierbare Gemisch vom Eingang A entnommen. Die Mischung kann einen höheren Druck als den in der Eingangsleitung haben oder es kann eine Ansaugvorrichtung vorgesehen werden, die den Eingang des Gemisches in die Leitung begünstigt. Das Gemisch fliesst durch das Rückschlagventil 1, die Flammenrückschlagsicherung 2 und das elektrische Steuerventil 3 ; sie wird dann über das Sicherheitsventil 5 geleitet, deren Boden aufbrechen kann, falls das in der Explosionskammer entzündete Gemisch die Flamme in Zuführungsrichtung ausbreiten sollte. Der gasförmige Strom wird dann über die Mischvorrichtung 6 in die Leitung 13 geführt. Der Kreis teilt sich in die Teile 13a und 13b, wobei der Teil 13b über das elektrische Steuerventil 3 als Bypass dient. Der Teil 13a trägt den Reaktor 7, in dem die Zündung erfolgt. Auch der Reaktoreingang wird vom elektrischen Steuerventil 3 kontrolliert. Der Reaktor 7 ist mit einer Spiralzündvorrichtung ausgestattet, die in Figur 1 mit 9 angegeben und in Fig. 2 dargestellt ist.

Sobald die Zündvorrichtung in Betrieb gesetz, ist, zeigt der Druckanzeiger 8 an, ob die Explosion erfolgt ist. Die Gase werden dann über das elektrische Steuerventil 3, das Rückschlagventil 1 und die Flammenrückschlagsicherung 2 entladen. Fakultativ ist für den Fall, dass Proben bezüglich der Gefährlichkeit des mit einem bestimmten Prozentsatz von Luft gemischten Gemisches die Leitung 30 vorgesehen, aus der die Luft entnommen und über ein Rückschlagventil 1, ein elektrisches Steuerventil 3 und einen Strömungsazeiger 4 geleitet wird. Die Luft wird dann mit den aus der Anlage entnommenen Gasen gemischt und das Ganze über das Sicherheitsventil 5 und die Mischvorrichtung 6 geleitet.

Von Zeit zu Zeit kann die Entnahme eines Teils der Mischung vor dem Eintritt in den Reaktor 7 über die Ablenkung 14 und nach dem Austritt aus dem Reaktor 7 über die Ablenkung 15 des Kreises mit Zuleitung zu einen Brenstoffprüfer 11 und einen Sauerstoffprüfer 12, vorgesehen werden, um die Zusammensetzung des Gemisches vor und nach der Explosionskammer und gegebenenfals auch nach einer erfolgten Explosion vergleichen zu können.

Der Kreislaufprogrammierer 10 veranlasst automatisch den Ablauf des Verfahrens, wobei er die Entnahmezeiten, die Prüfung der Zusamensetzung des Gemisches, die Zeiten für die Reinigung des Reaktors usw. festlegt. Mit diesem Programmierer kann die erfinunggemässe Vorrichtung das Gemisch, dessen Gefährlichkeit ermittelt werden soll, direkt aus der Anlage oder aus dem Raum entnehmen und die Messungen der Entzündbarkeit die sich regelmässig für unbestimmte Zeit wiederholen können, automatisch durchführen.

Wahlweise und nötigenfalls kann der Druckanzeiger 8 auch als Verfahrensregler für chemische Anlagen eingesetzt werden. Aufgrund der erhaltenen Messung kann im Falle einer Explosion die Zusammensetznung des geprüften Gemisches durch Einwirkung auf die Anlage so verändert werden, dass sie ausserhalb der Gefährlichkeitsgrenze gebracht wird. Selbstverständlich ist es vor allem im Fale von aus Brennstoff-Verbrennungsmitteln bestehenden Gemischen die zu Explosiverscheinungen führen können, absolut erforderlich, die Gefährlichkeit des Gemisches zu prüfen, um die Lage unter Kontrolle halten zu können.

In Fig. 2 ist eine besondere Verwirklichung der Zündvorrichtung dargestellt, mit der eine sehr hohe für jede beliebige Art eines Gemisches geeignete Wirkungskraft erhalten wird. Die Fig. 2 zeigt einen stabilisierten Zuführer 20 und zwei Zeitgeber-Vorrichtungen 21, 22, die die Relais RL1 bzw. RL2 steuern. Die Zündspirale SP ist aus Edelmetallen verwirklicht, die infolge des Stromdurchganges im Kreis 23 zum Glühen gebracht werden. Das von der Vorrichtung 21 entsprechend gesteuerte Relais RL1 schliesst den Kreis, während sich das Relais RL2 bei geschlossenen Kreis einschaltet und nach Ableitung des Ballastwiderstandes RZ ermöglicht, die Spirale für die ersten Augenblicke mit einem Überstrom zu speisen.

Aus der vorstehenden Beschreibung kann entnommen werden, dass die erfindungsgemässe Vorrichtung in der Lage ist, bei den für industrielle Prüfungen erforderlichen vorschiedenen Bedingungen bei hohen Temperaturen, hohen Drücken, bei niedrigen Temperaturen und niedrigen Drücken zu funktionieren. Im Kreislauf sind Varianten vorgesehen, die für den einschlägigen Fachmann offensichtlich sind.

**Patentansprüche**

1. Vorrichtung zum Prüfen der potentiellen Gefährlichkeit eines gasförmigen Gemisches mit einem Zuführungssystem für das Gemisch, einer mit einer Glühzündvorrichtung (9) versehenen Explosionskammer (7), einer Druckanzeigevorrichtung (8) sowie einem Sicherheitsventil (5) zum Vermeiden des Ausbreitens einer Flamme in Zuführungsrichtung, dadurch gekennzeichnet, dass die Zündvorrichung (9) ein spiralenförmiges Element (SP) aus Edelmetall aufweist, das durch einen Stromkreis (23), der einen anfänglichen Überstrom erzeugt, zum Glühen gebracht wird.

2. Vorrichtung nach Anspruch 1, dadurch gekennzeichnet, dass die Dauer des Überstroms und die Dauer des normalen Glühstroms von einem Zeitgeberelement (21, 22) bestimmt werden.

3. Vorrichtung nach Anspruch 1, dadurch gekennzeichnet, dass das vom gasförmigen Gemisch durchströmte Sicherheitsventil (5) so ausgebildet ist, dass der Boden aufbrechen kann, falls sich die Flamme des in der Explosionskammer (7) entzündeten Gemisches in Zuführungsrichtung ausbreitet.

4. Vorrichtung nach Anspruch 1, dadurch gekennzeichnet, dass sie eine Mischvorrichtung (6) zum Vorbereiten des gasförmigen Gemisches vor ihrem Einlass in die Explosionskammer (7) aufweist.

5. Vorrichtung nach Anspruch 1, dadurch gekennzeichnet, dass sie Mittel (11, 12, 14, 15) zur Entnahme des gasförmigen Gemisches vor und nach dem Eingang in die Explosionskammer (7) aufweist, um die Analyse der das Gemisch bildenden Elemente durchzuführen.

6. Vorrichtung nach Anspruch 1, dadurch gekennzeichnet, dass die Druckanzeigevorrichtung (8) in der Lage ist, Messungen vorzunehmen und Impulse zu geben, um dadurch einige grundsätzliche Parameter der Leitung der Anlage zu ändern.

7. Vorrichtung nach Anspruch 1, dadurch gekennzeichnet, dass die Druckanzeigevorrichtung (8) eine Alarmschaltung steuert.

## Claims

1. Apparatus, for controlling the potential danger of a gaseous mixture, comprising a feeding system for said mixture, an explosion chamber (7) provided with an incandescent ignition device (9) and a pressure-detecting device (8) as well as a safety valve to avoid spreading of the flame towards the feeding device, characterized in that the ignition device (9) comprises a coil element (SP) made of noble metal which is triggered to incandescence by an electric circuit (23) generating an initial overcurrent.

2. Apparatus according to claim 1, characterized in that the duration of the overcurrent and that of the normal incandescent current are defined by a timer (21, 22).

3. Apparatus according to claim 1, characterized in that the safety valve (5), through which the gaseous mixture passes, is made in such a way that its bottom can break open in the case the mixture flame which lighted up in the explosion chamber (7) should spread towards the feeder.

4. Apparatus according to claim 1, characterized in that it comprises a mixing device which prepares the gaseous mixture before its inlet in the explosion chamber (7).

5. Apparatus according to claim 1, characterized in that it comprises means (11, 12, 14, 15) for the drawing of the gaseous mixture before and after its inlet in the explosion chamber (7) so to carry out analysis on the constituting elements of the same.

6. Apparatus according to claim 1, characterized in that the pressure-detecting device (8) is able to take measurements and supply impulses so as to modify fundamental parameters defining the running of the plant.

7. Apparatus according to claim 1, characterized in that the pressure-detecting device (8) activates an allarm circuit.

## Revendications

1. Appareil, pour contrôler le danger potentiel d'un mélange gazeux, comprenant un système d'alimentation dudit mélange, une chambre d'explosion (7) munie d'un dispositif d'amorce à incandescence (9) et d'un dispositif révélateur de pression (8), ainsi que d'une vanne de sécurité pour éviter la propagation de la flamme vers l'alimentation, caractérisé par le fait que le dispositif d'amorce (9) comprend un élément à spiral (SP) fait de métal noble qui est porté à incandescence par moyen d'un circuit électrique (23) qui produit une surintensité initiale.

2. Appareil selon la revendication 1, caractérisé par le fait que la durée de la surintensité et celle du courant normal d'incandescence sont réglées par un élément compte-temps (21, 22).

3. Appareil selon la revendication 1, caractérisé par le fait que la vanne de sécurité (5) qui est traversée par le mélange de gaz est conformée de telle façon que le fond peut éclater ouvert au cas où la flamme du mélange qui s'est allumée dans la chambre d'explosion (7) doit se propager vers l'alimentation.

4. Appareil selon la revendication 1, caractérisé par le fait de comprendre un dispositif mélangeur (6) apte à préparer le mélange gazeux avant de l'introduire dans la chambre d'explosion (7).

5. Appareil selon la revendication 1, caractérisé par le fait de comprendre les moyens (11, 12, 14, 15) pour prélèvement du mélange gazeux avant et après l'introduction dans la chambre d'explosion (7) afin d'analyser les éléments constituant le même.

6. Appareil selon la revendication 1, caractérisé par le fait que le dispositif révélateur de pression (8) est à même d'exécuter des mesures et fournir des impulsions ainsi à modifier des paramètres fondamentaux de marche de l'installation.

7. Appareil selon la revendication 1, caractérisé par le fait que le dispositif révélateur de pression (8) est apte à activer un circuit d'alarme.

FIG.1

FIG.2